(19)

Europäisches
Patentamt
European
Patent Office
Office européen
des brevets

(11) **EP 4 131 024 A1**

(12) **EUROPEAN PATENT APPLICATION**

(43) Date of publication:
**08.02.2023   Bulletin 2023/06**

(21) Application number: **22191894.9**

(22) Date of filing: **24.08.2022**

(51) International Patent Classification (IPC):
*G06F 16/55* $^{(2019.01)}$       *G06F 16/35* $^{(2019.01)}$

(52) Cooperative Patent Classification (CPC):
**G06F 16/55; G06F 16/35**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **30.08.2021   CN 202111006586**

(71) Applicant: **Beijing Baidu Netcom
Science Technology Co., Ltd.
Beijing 100085 (CN)**

(72) Inventors:
• **GAN, Jingru
  Beijing, 100085 (CN)**

• **WANG, Haiwei
  Beijing, 100085 (CN)**
• **LUO, Jinchang
  Beijing, 100085 (CN)**
• **CHEN, Kunbin
  Beijing, 100085 (CN)**
• **HE, Wei
  Beijing, 100085 (CN)**
• **WANG, Shuhui
  Beijing, 100085 (CN)**

(74) Representative: **Maiwald GmbH
Elisenhof
Elisenstraße 3
80335 München (DE)**

(54) **METHOD AND APPARATUS FOR EXTRACTING INFORMATION, ELECTRONIC DEVICE AND STORAGE MEDIUM**

(57)    A method for extracting information, includes: obtaining an information stream comprising text and an image; generating, according to the text, embedded representations of textual entity mentions and a textual similarity matrix of the textual entity mentions and candidate textual entities; generating, according to the image, embedded representations of image entity mentions and an image similarity matrix of the image entity mentions and candidate image entities; and determining, based on an optimal transport, target textual entities of the textual entity mentions and target image entities of the image entity mentions according to the embedded representations of the textual entity mentions, the embedded representations of the image entity mentions, the textual similarity matrix and the image similarity matrix.

EP 4 131 024 A1

**Description**

## TECHNICAL FIELD

The disclosure relates to knowledge graph, image processing, natural language processing and deep learning in the field of artificial intelligence (AI) technology, and in particular to, a method and an apparatus for extracting information, an electronic device and a storage medium.

## BACKGROUND

Entity linking is a basic task in knowledge graphs. An information stream of mixed modalities is common in today's media. How to use information from different modalities to complete entity linking has become a new challenge.
In the related art, a multimodal entity linking manner is based on text entity linking and uses multimodal information as an auxiliary feature, but may not link images and text entities at the same time.

## SUMMARY

The disclosure provides a method and an apparatus for extracting information, an electronic device and a storage medium.
According to an aspect, a method for extracting information is provided. The method includes: obtaining an information stream including text and an image; generating, according to the text, embedded representations of textual entity mentions and a textual similarity matrix of the textual entity mentions and candidate textual entities; generating, according to the image, embedded representations of image entity mentions and an image similarity matrix of the image entity mentions and candidate image entities; and determining, based on an optimal transport, target textual entities of the textual entity mentions and target image entities of the image entity mentions according to the embedded representations of the textual entity mentions, the embedded representations of the image entity mentions, the textual similarity matrix and the image similarity matrix.
According to another aspect, an apparatus for extracting information is provided. The apparatus includes: an obtaining module, configured to obtain an information stream including text and an image; a first generating module, configured to generate, according to the text, embedded representations of textual entity mentions and a textual similarity matrix of the textual entity mentions and candidate textual entities; a second generating module, configured to generate, according to the image, embedded representations of image entity mentions and an image similarity matrix of the image entity mentions and candidate image entities; and a determining module, configured to determine, based on an optimal transport, target textual entities of the textual entity mentions and target image entities of the image entity mentions according to the embedded representations of the textual entity mentions, the embedded representations of the image entity mentions, the textual similarity matrix and the image similarity matrix.
According to another aspect, an electronic device is provided. The electronic device includes at least one processor and a memory communicatively coupled to the at least one processor. The memory is configured to store instructions executable by the at least one processor, and when the instructions are executed by the at least one processor, the at least one processor is caused to perform the above method for extracting information.
According to another aspect, a non-transitory computer-readable storage medium having computer instructions stored thereon is provided. The computer instructions are configured to cause a computer to perform the above method for extracting information.
According to another aspect, a computer program product including computer programs is provided. When the computer programs are executed by a processor, the above method for extracting information is performed.
It should be understood that the content described in this section is not intended to identify key or important features of embodiments of the disclosure, nor is it intended to limit the scope of the disclosure. Additional features of the disclosure will be easily understood based on the following description.

## BRIEF DESCRIPTION OF THE DRAWINGS

The drawings are used to better understand solutions and do not constitute a limitation to the disclosure, in which:

FIG. 1 is a flowchart of a method for extracting information according to a first embodiment of the disclosure.

FIG. 2 is a flowchart of a method for extracting information according to a second embodiment of the disclosure.

FIG. 3 is a flowchart of a method for extracting information according to a third embodiment of the disclosure.

FIG. 4 is a flowchart of a method for extracting information according to a fourth embodiment of the disclosure.

FIG. 5 is a flowchart of a method for extracting information according to a fifth embodiment of the disclosure.

FIG. 6 is a schematic diagram of a GWD distance loss function of a method for extracting information according to a fifth embodiment of the disclosure.

FIG. 7 is an overall flowchart of a method for extracting information according to a sixth embodiment of the disclosure.

FIG. 8 is a block diagram of an apparatus for extracting information according to a first embodiment of the disclosure.

FIG. 9 is a block diagram of an apparatus for extracting information according to a second embodiment of the disclosure.

FIG. 10 is a block diagram of an electronic device for implementing a method for extracting information of embodiments of the disclosure.

## DETAILED DESCRIPTION

The following describes embodiments of the disclosure with reference to the drawings, which includes various details of embodiments of the disclosure to facilitate understanding and shall be considered merely exemplary. Therefore, those of ordinary skill in the art should recognize that various changes and modifications can be made to embodiments described herein without departing from the scope of the disclosure. For clarity and conciseness, descriptions of well-known functions and structures are omitted in the following description.

AI is a technical science that studies and develops theories, methods, technologies and application systems for simulating, extending and expanding human intelligence. Currently, AI technology has been widely used due to advantages of high degree of automation, high accuracy and low cost.

Knowledge graph (KG), known as visualization in the knowledge field or a mapping map in the knowledge field in the library and information industry, is a series of various different graphs showing knowledge development processes and structure relationships, uses visualization technologies to describe knowledge resources and their carriers, and mines, analyzes, constructs, draws and displays knowledge and interconnections among knowledge. The KG is a combination of theories and methods of applied mathematics, graphics, information visualization technologies, information science and other disciplines with citation analysis, co-occurrence analysis and other methods in the metrology, which is a modern theory by using graphs to visually display the core structure, the development, the frontier field and the overall knowledge structure of the disciplinary to achieve the purpose of multi-disciplinary integration and provides practical and valuable reference for disciplinary research.

Image processing refers to the technology of analyzing images with computers to achieve desired results. Image processing is an action of using computers to process image information to satisfy people's visual psychology or application needs, which has a wide range of applications and is mostly used in surveying and mapping, atmospheric science, astronomy, beauty and image recognition.

Natural language processing (NLP) is a science that studies computer systems that can effectively realize natural language communication, especially software systems, and is an important direction in the field of computer science and AI.

Deep learning (DL) is a new research direction in the field of machine learning (ML), which learns inherent laws and representation levels of sample data. The information obtained in these learning processes is of great help to interpretation of data such as text, images and sounds. The ultimate goal of the DL is to enable machines to have an ability of analyzing and learning like humans and of recognizing data such as words, images and sounds. For the research content, it includes the neural network system based on convolution operations, namely the convolutional neural network; the self-encoding neural network based on multi-layer neurons; and the deep belief network, which is pre-trained in the form of the multi-layer self-encoding neural network and combined with the discriminative information to further optimize neural network weights. The DL has achieved many results in search technology, data mining, machine learning, machine translation, natural language processing, multimedia learning, speech, recommendation and personalization technology and other related fields.

Information extraction task refers to automatic extraction of structured information from unstructured data. Its sub-tasks include named entity recognition, entity linking and relationship extraction and event extraction in downstream. The named entity recognition algorithm can extract the entity name existing in the natural language text. This entity name may be called as a mention. What the entity linking task does is to link the entity mention in the text with the corresponding entity in the knowledge base, and the linked text is applied to other downstream tasks.

The entity linking (EL) task refers to finding a mention of an entity from unstructured text and linking this mention to the entity in the structured knowledge base. The entity linking task, named entity recognition and relationship extraction together constitute the natural language information extraction task, which has become a long-term research focus. At the same time, the entity linking is also the basis for various downstream tasks, such as question and answering based on knowledge base, content-based analysis and recommendation, search engine based on semantic entity, iterative updating of knowledge bases and the like.

A method and an apparatus for extracting information, an electronic device and a storage medium, provided in embodiments of the disclosure, are described below with reference to the accompanying drawings.

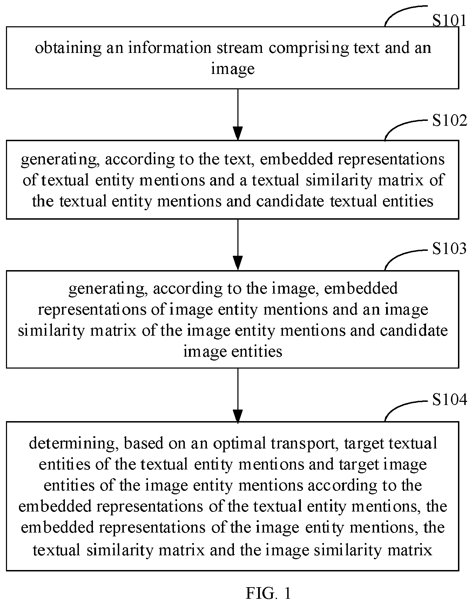

FIG. 1 is a flowchart of a method for extracting information according to a first embodiment of the disclosure.

As shown in FIG. 1, the method for extracting information may include steps S101-S104.

S101, an information stream including text and an image is obtained.

In detail, an execution body of the method for extracting information in embodiments of the disclosure may be the apparatus for extracting information in embodiments of the disclosure. The apparatus for extracting information may be a hardware device with data information processing capabilities and/or software for driving the hardware device. Optionally, the executive body may include a workstation, a server, a computer, a user terminal or other devices. The user terminal includes but is not limited to a mobile phone, a computer, an intelligent voice interaction device, a smart home appliance, a vehicle-mounted terminal or the like.

A multimodal information stream for the entity linking is obtained and the multimodal information stream at least includes text and images.

S102, according to the text, embedded representations of textual entity mentions and a textual similarity matrix of the textual entity mentions and candidate textual entities are generated.

In detail, the embedded representations of the textual entity mentions $m_t$ and the textual similarity matrix of the textual entity mentions $m_t$ and the candidate textual entities $e_t$ are generated according to the text in the information stream obtained in S101. The candidate textual entities $e_t$ may be link entities corresponding to the textual entity mentions $m_t$. In embodiments of the disclosure, $m$ represents the entity mention, $e$ represents the entity, and the subscripts $t$ and $v$ represent text and image respectively.

S103, according to the image, embedded representations of image entity mentions and an image similarity matrix of the image entity mentions and candidate image entities are generated.

In detail, the embedded representations of the image entity mentions $m_v$ and the image similarity matrix of the image entity mentions $m_v$ and the candidate image entities $e_v$ are generated according to the image in the information stream obtained in S101. The candidate image entities $e_v$ may be link entities corresponding to the image entity mentions $m_v$.

S104, based on an optimal transport, target textual entities of the textual entity mentions and target image entities of the image entity mentions are generated according to the embedded representations of the textual entity mentions, the embedded representations of the image entity mentions, the textual similarity matrix and the image similarity matrix.

In detail, this step performs common disambiguation on the entity mentions of multiple modalities (i.e., the textual entity mentions and the image entity mentions) obtained in S102 and S103. The optimal transport manner is used to discover implicit associations between entity mentions and candidate entities in different modalities. The entity mentions in the same modality usually belong to the same subject, so they have certain associations. The entity mentions in different modalities may point to the same entity. So this joint disambiguation process can be modeled as a many-to-many connected bipartite graph matching problem, that is, the association of text features (that is, the embedded representations of the textual entity mentions) and image features (that is, the embedded representations of the image entity mentions) is regarded as moving from one probability distribution to another probability distribution, so the optimal transport algorithm can be used to resolve this issue.

The optimal transport, also known as Wasserstein distance or Earth Mover's Distance (EMD) in discrete cases, is a distance measure between probability distributions. For example, the goal of the optimal transport problem is to find the optimal distribution manner for transporting items from N warehouses to M destinations. Applied to the multimodal entity linking problem, the goal of the optimal transport problem is not to find the final optimal transport map, but to use the optimal transport cost as a statistical divergence to reflect the dispersion degree between the two probability distribution densities. $\mu_t : \mathcal{X} \to \mathbb{R}$ is used to represent the source distribution, that is, the text feature distribution; and

$\mu_v : \mathcal{X} \to \mathbb{R}$ is used to represent the target distribution, that is, the image feature distribution. A transport transition matrix $T$ is defined, where $T(M_t) = M_v$ represents a process of converting all textual mention features in a document into image mention features, and its distance $\mathcal{D}(\mu_t, \mu_v)$ represents the minimum transport cost for transporting $M_t$ to $M_v$. According to the transport transition matrix $T$ corresponding to the minimum transport cost and the textual similarity matrix and image similarity matrix obtained in S102 and S103, the target textual entities corresponding to the textual entity mentions and the target image entities corresponding to the image entity mentions may be extrapolated in an auxiliary way.

In conclusion, with the method for extracting information provided in embodiments of the disclosure, an information stream including text and an image is obtained; according to the text, embedded representations of textual entity mentions and a textual similarity matrix of the textual entity mentions and candidate textual entities are generated; according to the image, embedded representations of image entity mentions and an image similarity matrix of the image entity mentions and candidate image entities are generated; and based on an optimal transport, target textual entities of the textual entity mentions and target image entities of the image entity mentions are generated according to the embedded representations of the textual entity mentions, the embedded representations of the image entity mentions, the textual similarity matrix and the image similarity matrix. With the method for extracting information provided in embodiments of the disclosure, the entity mentions of text and image modalities are modeled at the same time to generate the textual similarity matrix and the image similarity matrix, and the target entity linking on text and image modalities may be realized based on the optimal transport algorithm, which realizes the text and image entity linking at the same time and improves the accuracy of linking entity mentions in multimodal data and corresponding entities in the knowledge base.

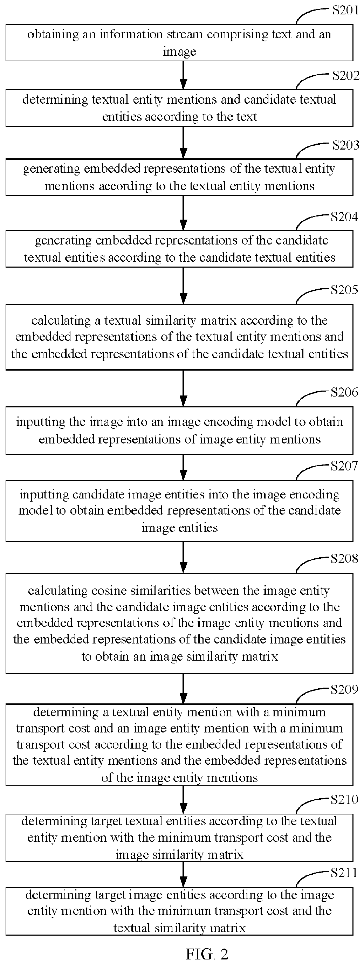

FIG. 2 is a flowchart of a method for extracting information according to a second embodiment of the disclosure. As shown in FIG. 2, based on embodiments shown in FIG. 1 above, the method for extracting information may include steps S201-S211.

S201, an information stream including text and an image is obtained.

S201 in embodiments of the disclosure is the same as S101 in the foregoing embodiments, and details are not described herein again.

"Generating, according to the text, embedded representations of textual entity mentions and a textual similarity matrix of the textual entity mentions and candidate textual entities" in S102 in the above-mentioned embodiments may include S202-S205.

S202, textual entity mentions and candidate textual entities are determined according to the text.

In detail, the textual entity mentions in the text and the candidate textual entities corresponding to the textual entity mentions are determined according to the text in the information stream obtained in S201.

S203, embedded representations of the textual entity mentions are generated according to the textual entity mentions.

In detail, the embedded representations of the textual entity mentions are generated, according to the textual entity mentions determined in S202, based on GloVe word embedding and Wikipedia entities, and Ganea embedded encoding representations of co-occurrence frequencies of words.

S204, embedded representations of the candidate textual entities are generated according to the candidate textual entities.

In detail, S204 in embodiments of the disclosure is similar to the foregoing S203, and details are not repeated herein.

S205, a textual similarity matrix is calculated according to the embedded representations of the textual entity mentions and the embedded representations of the candidate textual entities.

In detail, similarities between the textual entity mentions and the candidate textual entities are calculated according to the embedded representations of the textual entity mentions generated in S203 and the embedded representations of the candidate textual entities generated in S204 to obtain the textual similarity matrix.

"Generating, according to the image, embedded representations of image entity mentions and a image similarity matrix of the image entity mentions and candidate image entities" in S103 in the above-mentioned embodiments may include S206-S208.

S206, the image is input into an image encoding model to obtain embedded representations of image entity mentions.

In detail, the image in the information stream obtained in S201 is input into the image encoding model to obtain the embedded representations of the image entity mentions.

S207, candidate image entities are input into the image encoding model to obtain embedded representations of the candidate image entities.

In detail, the candidate image entities corresponding to the image entity mentions are input into the image encoding model to obtain the embedded representations of the candidate image entities. The candidate image entities refer to the first images in the linked terms of all textual entity mentions in the text.

The image or the candidate image entity is segmented and expanded into an image feature sequence that is input into the image encoding model to obtain the embedded representation of the encoded and compressed image entity mention or the embedded representation of the candidate image entity, where the image or the candidate image entity can be an RGB image that is not processed, and the image encoding model includes but is not limited to, an encoder module in a 6-layer transformer model. Each layer of the encoder module in the transformer model includes two sublayers: a self-attention layer and a feed forward layer.

The self-attention layer uses a multi-head attention mechanism. The model is divided into multiple heads and each head forms a subspace, so the model can pay attention to information at different levels. The calculation manner of the multi-head attention mechanism is as follows. First, a query vector Q(Query), an attention vector K(Key) and a value vector V(Value) are obtained by mapping the same input information through different weights $W^Q, W^K, W^V$. The correlation is calculated by the dot product $QK^T$. An attention distribution matrix $Attention(Q,K,V)$ is calculated by a *softmax* function.

$$\text{MultiHead}(Q, K, V) = Concat \ ( \text{head}_1, ..., \text{head}_h)W^O$$

$$\text{head}_i = Attention \left( QW_i^Q, KW_i^K, VW_i^V \right)$$

$$Attention(Q, K, V) = softmax \left( \frac{QK^T}{\sqrt{d_k}} \right) V$$

The feed forward layer includes a fully-connected layer and a nonlinear activation *Relu* function, in which all parameters need to be trained.

$$FFN(x) = \max(0, xW_1 + b_1) W_2 + b_2$$

In embodiments of the disclosure, the input image or the candidate image entity is firstly divided into 64 blocks uniformly, and expanded into a sequence. The embedding vector and the position encoding vector of each block are added as the input of the encoder. In each layer of the encoder, the input data first passes through the multi-head self-attention layer to focus on global features, then passes through the feed forward layer, and finally passes through the average pooling operation, so that 64 image feature sequences are mapped and compressed into a final embedding representation that satisfies the following formula:

$$O^v = \text{LayerNorm} \left( x + \left( \text{MultiHead} (x) \right) \right)$$

$$z_i^v = \text{LayerNorm} \left( o^v + \left( \text{FNN} (o^v) \right) \right)$$

$$e_v, m_v = \frac{1}{64} \sum_i z_i^v, (i = 1 \cdots, 64)$$

where, $x$ represents the input sequence, $O^v$ represents the output of the multi-head self-attention layer, $z_i^v$ represents the output of the feed forward layer, and $e_v$, $m_v$ are the normalized model output of the candidate image entity and the image entity mention, respectively.

It should be noted that in embodiments of the disclosure, the transformer encoder is trained by reducing the pairwise loss, and the triplet loss of the image entity mention and the candidate image entity is defined, which satisfies the following formula:

$$\mathcal{L}^v_{triplet} = \max[0, margin - s(e_v, m_v) + s(\hat{e_v}, m_v)]$$

where, for the image entity mention $m_v$, $e_v$ is the correct link entity, and $\hat{e_v}$ is the negative sample entity.

S208, cosine similarities between the image entity mentions and the candidate image entities are calculated according to the embedded representations of the image entity mentions and the embedded representations of the candidate image entities to obtain an image similarity matrix.

In detail, according to the embedded representations of the image entity mentions obtained in S206 and the embedded representations of the candidate image entities obtained in S207, the cosine similarities between the image entity mentions and the candidate image entities are calculated to obtain the image similarity matrix.

"Determining, based on an optimal transport, target textual entities of the textual entity mentions and target image entities of the image entity mentions according to the embedded representations of the textual entity mentions, the embedded representations of the image entity mentions, the textual similarity matrix and the image similarity matrix" in S104 in the above-mentioned embodiments may include S209-S211.

S209, a textual entity mention with a minimum transport cost and an image entity mention with a minimum transport cost are determined according to the embedded representations of the textual entity mentions and the embedded representations of the image entity mentions.

In detail, referring to the relevant description in S104, the textual entity mention with the minimum transport cost and the image entity mention with the minimum transport cost are determined according to the transport transition matrix T corresponding to the minimum transport cost.

S210, target textual entities are determined according to the textual entity mention with the minimum transport cost and the image similarity matrix.

In detail, the cost of the textual entity mention with the minimum transport cost determined in S209 is weighted and added to the image similarity matrix determined in S208, and for each textual entity mention, the candidate textual entity with the highest score is selected as the target textual entity.

S211, target image entities are determined according to the image entity mention with the minimum transport cost and the textual similarity matrix.

In detail, S211 in embodiments of the disclosure is similar to the foregoing S210, and details are not repeated herein.

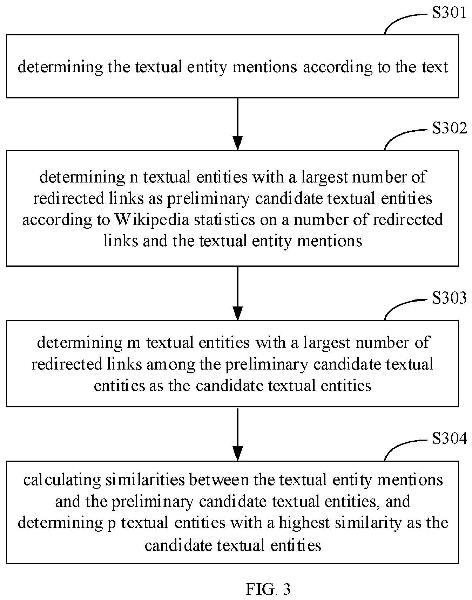

Further, as shown in FIG. 3, on the basis of embodiments shown in the above-mentioned FIG. 2, "determining the textual entity mentions and the candidate textual entities according to the text" in S202 may include S301-S304.

S301, the textual entity mentions are determined according to the text.

S302, n textual entities with a largest number of redirected links are determined as preliminary candidate textual entities according to Wikipedia statistics on a number of redirected links and the textual entity mentions.

In detail, for each textual entity mention, n textual entities with a largest number of redirected links are determined as preliminary candidate textual entities according to Wikipedia statistics on the number of redirected links and the textual entity mentions determined in S301. The Wikipedia statistics on the number of redirected links is specifically the statistics of the number of textual entity mentions redirecting to textual entities in all web pages.

S303, m textual entities with a largest number of redirected links among the preliminary candidate textual entities are determined as the candidate textual entities.

In detail, m (for example, 4) textual entities with a largest number of redirected links among the n (for example, 30) preliminary candidate textual entities determined in S302 are determined as the candidate textual entities.

S304, similarities between the textual entity mentions and the preliminary candidate textual entities are calculated, and p textual entities with a highest similarity are determined as the candidate textual entities.

In detail, the textual entity mentions determined in S301 and the n (for example, 30) preliminary candidate textual entities determined in S302 are represented in the form of vectors through GloVe (Global Vectors for Word Representation) model, and then the similarities are calculated by the dot product between the vectors. The p (for example, 3) textual entities with the highest similarity are determined as the candidate textual entities.

In embodiments of the disclosure, the m candidate textual entities determined in S303 and the p candidate textual entities determined in S304 together form a final candidate textual entity set, that is, each textual entity mention corresponds to m + p (for example, 7) candidate textual entities.

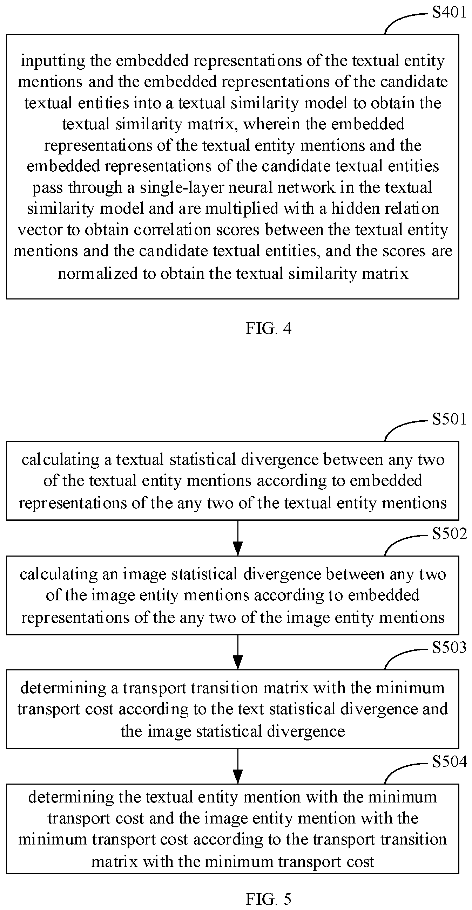

Further, as shown in FIG. 4, on the basis of embodiments shown in the above-mentioned FIG. 2, "calculating the textual similarity matrix according to the embedded representations of the textual entity mentions and the embedded representations of the candidate textual entities" in S205 may include S401.

S401, the embedded representations of the textual entity mentions and the embedded representations of the candidate textual entities are input into a textual similarity model to obtain the textual similarity matrix, in which the embedded representations of the textual entity mentions and the embedded representations of the candidate textual entities pass through a single-layer neural network in the textual similarity model and are multiplied with a hidden relation vector to obtain correlation scores between the textual entity mentions and the candidate textual entities, and the scores are normalized to obtain the textual similarity matrix.

In detail, it is assumed that the embedded representations of the textual entity mentions are $m_t$ and the embedded representations of the candidate textual entities are $e_t$, there are K hidden relationships with different weights between any two textual entity mentions ($m_{ti}$, $m_{tj}$), each relationship is represented by a hidden relationship vector $\alpha_{ijk}$, and the embedded representations of the textual entity mentions and the embedded representations of the candidate textual entities are passed through the single-layer neural network $f(m_t, e_t)$ in the textual similarity model, and then multiplied by the hidden relationship vector $\alpha_{ijk}$ to obtain association scores between the textual entity mentions and the candidate textual entities. The association scores of the same hidden relationship are normalized (that is, a sum of the association scores of all textual entity mention-candidate textual entity pairs of the same hidden relationship is scaled to 1) to obtain the textual similarity matrix. In embodiments of the disclosure, training is performed by updating the text modal ranking loss $L^t_{ranking}$. In the model test, the association scores of K hidden relationships are added together to obtain the global score of the textual entity mention-candidate textual entity pair, and the candidate textual entity with the highest score is used as the final link result.

Further, as shown in FIG. 5, on the basis of the above-mentioned embodiments shown in FIG. 2, "determining a textual entity mention with a minimum transport cost and an image entity mention with a minimum transport cost according to the embedded representations of the textual entity mentions and the embedded representations of the image entity mentions" in S209 may include S501-S504.

S501, a textual statistical divergence between any two of the textual entity mentions is calculated according to embedded representations of the any two of the textual entity mentions.

In detail, it is assumed that $i,i'$ represent any two textual entity mentions, and embedded representations of any two textual entity mentions are $m_{ti}$, $m_{ti'}$. The textual statistical divergence between any two textual entity mentions is obtained as $c_1\left(x_i, x_i'\right)$. The textual statistical divergence may be Gromov-Wasserstein Distance (GWD).

S502, an image statistical divergence between any two of the image entity mentions is calculated according to embedded representations of the any two of the image entity mentions.

In detail, it is assumed that $j,j'$ represent any two image entity mentions, and embedded representations of any two image entity mentions are $m_{vj}$, $m_{vj'}$. The image statistical divergence between any two image entity mentions is obtained as $c_2\left(y_i, y_i'\right)$. The image statistical divergence may be Gromov-Wasserstein Distance (GWD).

S503, a transport transition matrix with the minimum transport cost is determined according to the text statistical divergence and the image statistical divergence.

In detail, according to the textual statistical divergence calculated in S501 and the image statistical divergence calculated in S502, a transport transition matrix $T$ is defined. $T(M_t) = M_v$ means a process of converting all textual mention features in a document into image mention features and its distance $\mathcal{D}(\mu_t, \mu_v)$ represents the minimum transport cost for transporting $M_t$ to $M_v$, which satisfies the following formula:

$$\mathcal{D}(\mu_t, \mu_v) = \min_{T \in \Pi(\mu_t, \mu_v)} \sum_{i,i',j,j'} T_{ij} T_{i'j'} L\left(x_i, y_j, x_i', y_j'\right)$$

$$L\left(x_i, y_j, x_i', y_j'\right) = \left\| c_1\left(x_i, x_i'\right) - c_2\left(y_i, y_i'\right) \right\|$$

where, $x$, $y$ represent the embedded representations. In the calculation, $m_{ti}$, $m_{ti'}$ is substituted into $x_i$, $x_i'$ to calculate the Wasserstein Distance between two textual entity mentions. Similarly, $m_{vj}$, $m_{vj'}$ is substituted into $y_j$, $y_{j'}$ to calculate the Wasserstein Distance between two image entity mentions.

$\mu_t$ represents the textual feature distribution, and $\mu_v$ represents the image feature distribution. The entropy-regularized Gromov-Watherstein distance is calculated by the Sinkhorn algorithm, that is, the problem is transformed into a strongly convex approximation problem through entropic regularization, and the Sinkhorn algorithm is used to solve it, which satisfies the following formula:

$$\min_{T\in\Pi(\mu_t,\mu_v)} \sum_{i=1}^{n} \sum_{j=1}^{m} T_{ij}\, c\big(x_i, y_j\big) + \beta H(T)$$

where, $H(T) = \Sigma_{i,j}\, T_{ij} \log T_{ij}$ and the hyper parameter $\beta$ is used to control the weight of entropy.

S504, the textual entity mention with the minimum transport cost and the image entity mention with the minimum transport cost are determined according to the transport transition matrix with the minimum transport cost.

In detail, the textual entity mention corresponding to the transport transition matrix T with the minimum transport cost is determined as the textual entity mention with the minimum transport cost, and the image entity mention corresponding to the transport transition matrix T with the minimum transport cost is determined as the image entity mention with the minimum transport cost.

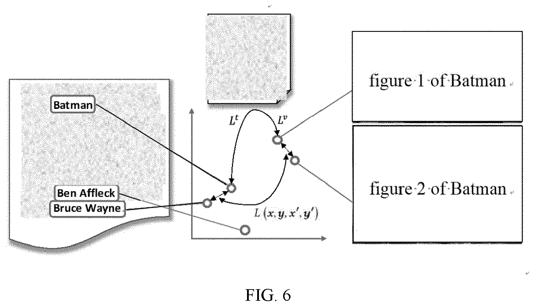

It should be noted herein that, in embodiments of the disclosure, the cosine similarity between the GWD distance referred to by a pair of textual entity mentions and the GWD distance referred to by a pair of image entity mentions is calculated by calculating the GWD distance loss function, so that the distance of a pair of textual entity mentions that point to the same entity is similar to the distance of a pair of image entity mentions that point to the same entity. The schematic diagram of the GWD distance loss function shown in FIG. 6, the distance between two textual entity mentions ("Batman", "Bruce Wayne") pointing to the entity "Bruce Wayne is similar to the distance between the two Batman images.

In embodiments of the disclosure, the training process is constrained by defining a joint loss function, in which the joint loss function is calculated from the GWD distance loss function, the text modality ranking loss, and the image modality triplet loss calculated in S504 by the following formula:

$$L_{\text{joint}} = L(x, y, x', y') + L^{t}_{ranking} + L^{v}_{\text{triplet}}$$

In conclusion, with the method for extracting information provided in embodiments of the disclosure, an information stream including text and an image is obtained; according to the text, embedded representations of textual entity mentions and a textual similarity matrix of the textual entity mentions and candidate textual entities are generated; according to the image, embedded representations of image entity mentions and an image similarity matrix of the image entity mentions and candidate image entities are generated; and based on an optimal transport, target textual entities of the textual entity mentions and target image entities of the image entity mentions are generated according to the embedded representations of the textual entity mentions, the embedded representations of the image entity mentions, the textual similarity matrix and the image similarity matrix. With the method for extracting information provided in embodiments of the disclosure, the entity mentions of text and image modalities are modeled at the same time, the candidate textual entities are obtained according to the Wikipedia statistics on the number of redirected links, the embedded representations of the textual entity mentions and the candidate textual entities are generated based on GloVe word embedding and Wikipedia entities and Ganea embedded encoding representations of co-occurrence frequencies of words, the image is input into the Transformer model to generate the embedded representations of the candidate image entities and the image entity mentions, and the target entity linking on text and image modalities may be realized based on the optimal transport algorithm, which realizes the text and image entity linking at the same time and improves the accuracy of linking entity mentions in multimodal data and corresponding entities in the knowledge base.

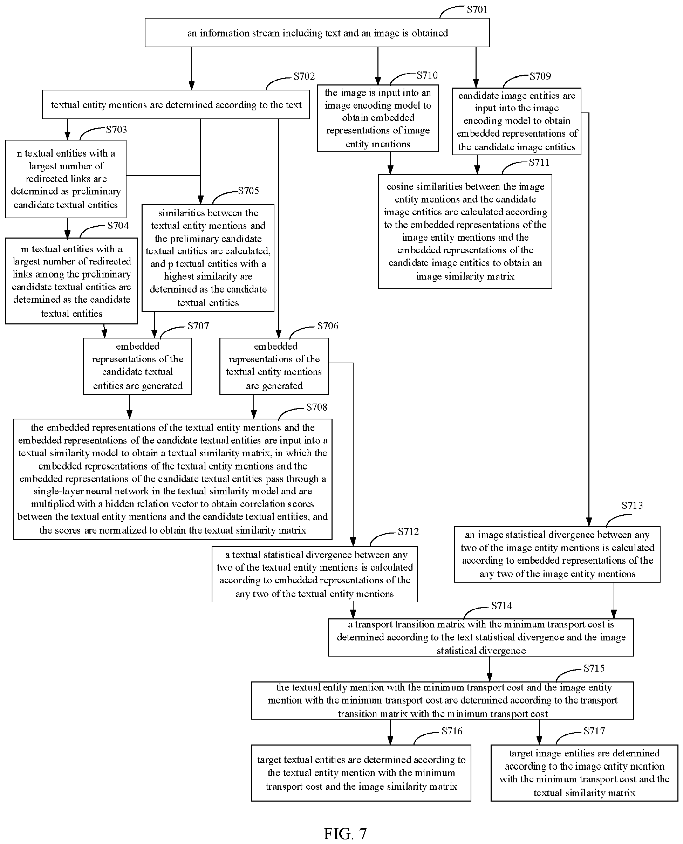

FIG. 7 is an overall flowchart of a method for extracting information according to a sixth embodiment of the disclosure. As shown in FIG. 7, the method for extracting information includes steps S701-S717.

S701, an information stream including text and an image is obtained.

S702, textual entity mentions are determined according to the text.

S703, n textual entities with a largest number of redirected links are determined as preliminary candidate textual entities according to Wikipedia statistics on a number of redirected links and the textual entity mentions.

S704, m textual entities with a largest number of redirected links among the preliminary candidate textual entities are determined as the candidate textual entities. It continues to S707.

S705, similarities between the textual entity mentions and the preliminary candidate textual entities are calculated, and p textual entities with a highest similarity are determined as the candidate textual entities. It continues to S707.

S706, embedded representations of the candidate textual entities are generated according to the candidate textual entities.

S707, embedded representations of the textual entity mentions are generated according to the textual entity mentions.

S708, the embedded representations of the textual entity mentions and the embedded representations of the candidate textual entities are input into a textual similarity model to obtain a textual similarity matrix, in which the embedded representations of the textual entity mentions and the embedded representations of the candidate textual entities pass through a single-layer neural network in the textual similarity model and are multiplied with a hidden relation vector to obtain correlation scores between the textual entity mentions and the candidate textual entities, and the scores are normalized to obtain the textual similarity matrix. It continues to S717.

S709, the image is input into an image encoding model to obtain embedded representations of image entity mentions.

S710, candidate image entities are input into the image encoding model to obtain embedded representations of the candidate image entities.

S711, cosine similarities between the image entity mentions and the candidate image entities are calculated according to the embedded representations of the image entity mentions and the embedded representations of the candidate image entities to obtain an image similarity matrix. It continues to S716.

S712, a textual statistical divergence between any two of the textual entity mentions is calculated according to embedded representations of the any two of the textual entity mentions. It continues to S714.

S713, an image statistical divergence between any two of the image entity mentions is calculated according to embedded representations of the any two of the image entity mentions.

S714, a transport transition matrix with the minimum transport cost is determined according to the text statistical divergence and the image statistical divergence.

S715, the textual entity mention with the minimum transport cost and the image entity mention with the minimum transport cost are determined according to the transport transition matrix with the minimum transport cost.

S716, target textual entities are determined according to the textual entity mention with the minimum transport cost and the image similarity matrix.

S717, target image entities are determined according to the image entity mention with the minimum transport cost and the textual similarity matrix.

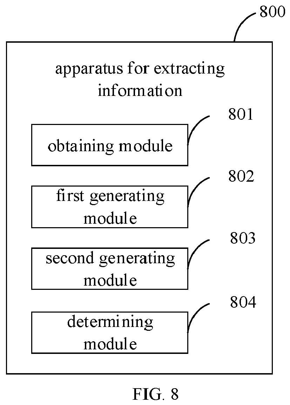

FIG. 8 is a block diagram of an apparatus 800 for extracting information according to a first embodiment of the disclosure.

As shown in FIG. 8, the apparatus in some embodiments of the disclosure includes an obtaining module 801, a first generating module 802, a second generating module 803 and a determining module 804.

The obtaining module 801 is configured to obtain an information stream including text and an image.

The first generating module 802 is configured to generate, according to the text, embedded representations of textual entity mentions and a textual similarity matrix of the textual entity mentions and candidate textual entities.

The second generating module 803 is configured to generate, according to the image, embedded representations of image entity mentions and an image similarity matrix of the image entity mentions and candidate image entities.

The determining module 804 is configured to determine, based on an optimal transport, target textual entities of the textual entity mentions and target image entities of the image entity mentions according to the embedded representations of the textual entity mentions, the embedded representations of the image entity mentions, the textual similarity matrix and the image similarity matrix.

It should be noted that, the foregoing explanations on the method embodiments are also applicable to the apparatus embodiments, which are not repeated herein.

In conclusion, with the apparatus for extracting information provided in embodiments of the disclosure, an information stream including text and an image is obtained; according to the text, embedded representations of textual entity mentions and a textual similarity matrix of the textual entity mentions and candidate textual entities are generated; according to the image, embedded representations of image entity mentions and an image similarity matrix of the image entity mentions and candidate image entities are generated; and based on an optimal transport, target textual entities of the textual entity mentions and target image entities of the image entity mentions are generated according to the embedded representations of the textual entity mentions, the embedded representations of the image entity mentions, the textual similarity matrix and the image similarity matrix. With the apparatus for extracting information provided in embodiments of the disclosure, the entity mentions of text and image modalities are modeled at the same time to generate the textual similarity matrix and the image similarity matrix, and the target entity linking on text and image modalities may be realized based on the optimal transport algorithm, which realizes the text and image entity linking at the same time and improves the accuracy of linking entity mentions in multimodal data and corresponding entities in the knowledge base.

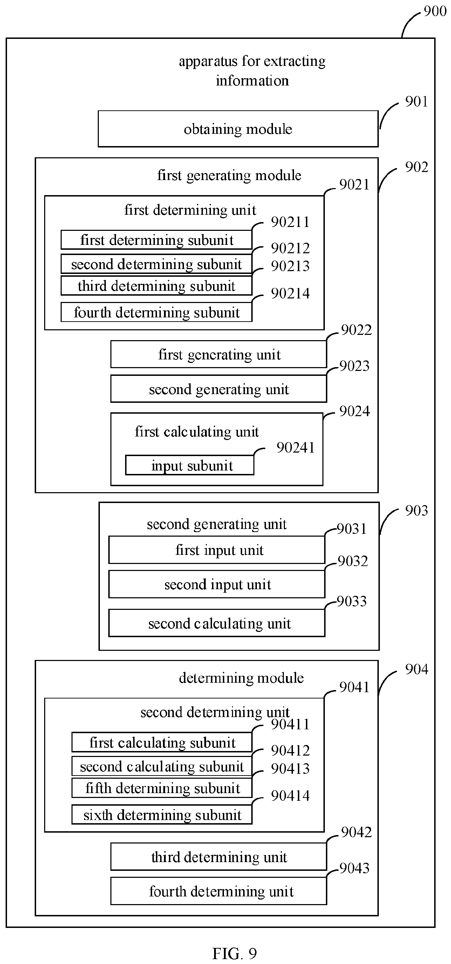

FIG. 9 is a block diagram of an apparatus 900 for extracting information according to a second embodiment of the disclosure.

As shown in FIG. 9, the apparatus in some embodiments of the disclosure includes an obtaining module 901, a first generating module 902, a second generating module 903 and a determining module 904.

The obtaining module 901 has the same structure and function as the obtaining module 801 as described above; the first generating module 902 has the same structure and function as the first generating module 802 as described above; the second generating module 903 has the same structure and function as the second generating module 803 as described above; and the determining module 904 has the same structure and function as the determining module 804.

Further, the first generating module 902 includes: a first determining unit 9021, configured to determine the textual entity mentions and the candidate textual entities according to the text; a first generating unit 9022, configured to generate the embedded representations of the textual entity mentions according to the textual entity mentions; a second generating unit 9023, configured to generate embedded representations of the candidate textual entities according to the candidate textual entities; and a first calculating unit 9024, configured to calculate the textual similarity matrix according to the embedded representations of the textual entity mentions and the embedded representations of the candidate textual entities.

Further, the first determining unit 9021 includes: a first determining subunit 90211, configured to determine the textual entity mentions according to the text; a second determining subunit 90212, configured to determine n textual entities with a largest number of redirected links as preliminary candidate textual entities according to Wikipedia statistics on a number of redirected links and the textual entity mentions; a third determining subunit 90213, configured to determine m textual entities with a largest number of redirected links among the preliminary candidate textual entities as the candidate textual entities; and a fourth determining subunit 90214, configured to calculate similarities between the textual entity mentions and the preliminary candidate textual entities, and determine p textual entities with a highest similarity as the candidate textual entities.

Further, the first calculating unit 9024 includes: an input subunit 90241, configured to input the embedded representations of the textual entity mentions and the embedded representations of the candidate textual entities into a textual similarity model to obtain the textual similarity matrix, in which the embedded representations of the textual entity mentions and the embedded representations of the candidate textual entities pass through a single-layer neural network in the textual similarity model and are multiplied with a hidden relation vector to obtain correlation scores between the textual entity mentions and the candidate textual entities, and the scores are normalized to obtain the textual similarity matrix

Further, the second generating unit 903 includes: a first input unit 9031, configured to input the image into an image encoding model to obtain the embedded representations of the image entity mentions; a second input unit 9032, configured to input the candidate image entities into the image encoding model to obtain embedded representations of the candidate image entities; and a second calculating unit 9033, configured to calculate cosine similarities between the image entity mentions and the candidate image entities according to the embedded representations of the image entity mentions and the embedded representations of the candidate image entities to obtain the image similarity matrix.

Further, the image encoding model is an encoder module in a transformer model.

Further, the determining module 904 includes: a second determining unit 9041, configured to determine a textual entity mention with a minimum transport cost and an image entity mention with a minimum transport cost according to the embedded representations of the textual entity mentions and the embedded representations of the image entity mentions; a third determining unit, 9042 configured to determine the target textual entities according to the textual entity mention with the minimum transport cost and the image similarity matrix; and a fourth determining unit 9043, configured to determine the target image entities according to the image entity mention with the minimum transport cost and the textual similarity matrix.

Further, the second determining unit 9041 includes: a first calculating subunit 90411, configured to calculate a textual statistical divergence between any two of the textual entity mentions according to embedded representations of the any two of the textual entity mentions; a second calculating subunit 90412, configured to calculate an image statistical divergence between any two of the image entity mentions according to embedded representations of the any two of the image entity mentions; a fifth determining subunit 90413, configured to determine a transport transition matrix with the minimum transport cost according to the text statistical divergence and the image statistical divergence; and a sixth determining subunit 90414, configured to determine the textual entity mention with the minimum transport cost and the image entity mention with the minimum transport cost according to the transport transition matrix with the minimum transport cost.

Further, the textual statistical divergence and/or the image statistical divergence is a Gromov-Wasserstein distance.

It should be noted that, the foregoing explanations on the method embodiments are also applicable to the apparatus embodiments, which are not repeated herein.

In conclusion, with the apparatus for extracting information provided in embodiments of the disclosure, an information stream including text and an image is obtained; according to the text, embedded representations of textual entity mentions and a textual similarity matrix of the textual entity mentions and candidate textual entities are generated; according to the image, embedded representations of image entity mentions and an image similarity matrix of the image entity mentions and candidate image entities are generated; and based on an optimal transport, target textual entities of the textual entity mentions and target image entities of the image entity mentions are generated according to the embedded representations of the textual entity mentions, the embedded representations of the image entity mentions, the textual similarity matrix and the image similarity matrix. With the apparatus for extracting information provided in embodiments of the disclosure, the entity mentions of text and image modalities are modeled at the same time, the candidate textual entities are obtained according to the Wikipedia statistics on the number of redirected links, the embedded representations of the textual entity mentions and the candidate textual entities are generated based on GloVe word embedding and Wikipedia entities and Ganea embedded encoding representations of co-occurrence frequencies of words, the image is input into the Transformer model to generate the embedded representations of the candidate image entities and the image entity mentions, and the target entity linking on text and image modalities may be realized based on the optimal transport algorithm, which realizes the text and image entity linking at the same time and improves the accuracy of linking entity mentions in multimodal data and corresponding entities in the knowledge base.

In the technical solutions of the disclosure, acquisition, storage and application of the user's personal information involved all comply with the provisions of relevant laws and regulations, and do not violate public order and good customs.

According to some embodiments of the disclosure, the disclosure also provides an electronic device, a readable storage medium and a computer program product.

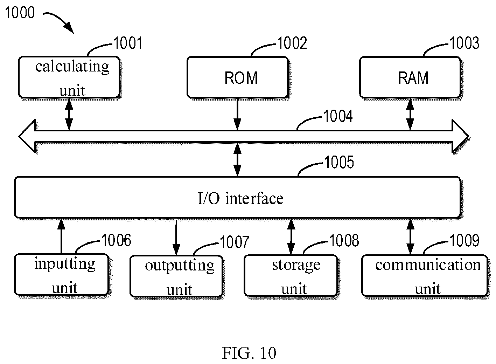

FIG. 10 is a block diagram of an electronic device 1000 for implementing some embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar calculating devices. The components shown here, their connections and relations, and their functions are merely examples, and are not intended to limit the implementation of the disclosure described and/or required herein.

As illustrated in FIG. 10, the device 1000 includes a calculating unit 1001 performing various appropriate actions and processes based on computer programs stored in a read-only memory (ROM) 1002 or computer programs loaded from the storage unit 1008 to a random access memory (RAM) 1003. In the RAM 1003, various programs and data required for the operation of the device 1000 are stored. The calculating unit 1001, the ROM 1002, and the RAM 1003 are connected to each other through a bus 1004. An input/output (I/O) interface 1005 is also connected to the bus 1004.

Components in the device 1000 are connected to the I/O interface 1005, including: an inputting unit 1006, such as a keyboard, a mouse; an outputting unit 1007, such as various types of displays, speakers; a storage unit 1008, such as a disk, an optical disk; and a communication unit 1009, such as network cards, modems, and wireless communication transceivers. The communication unit 1009 allows the device 1000 to exchange information/data with other devices through a computer network such as the Internet and/or various telecommunication networks.

The calculating unit 1001 may be various general-purpose and/or dedicated processing components with processing and calculating capabilities. Some examples of calculating unit 1001 include, but are not limited to, a central processing unit (CPU), a graphics processing unit (GPU), various dedicated AI calculating chips, various calculating units that run machine learning model algorithms, and a digital signal processor (DSP), and any appropriate processor, controller and microcontroller. The calculating unit 1001 executes the various methods and processes described above, such as the method for recognizing an action. For example, in some embodiments, the method may be implemented as a computer software program, which is tangibly contained in a machine-readable medium, such as the storage unit 1008. In some embodiments, part or all of the computer program may be loaded and/or installed on the device 1000 via the ROM 1002 and/or the communication unit 1009. When the computer program is loaded on the RAM 1003 and executed by the calculating unit 1001, one or more steps of the method described above may be executed. Alternatively, in other embodiments, the calculating unit 1001 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a calculating system that includes background components (for example, a data server), or a calculating system that includes middleware components (for example, an application server), or a calculating system that includes front-end components (for example, a user computer with a graphical user interface or a web browser, through which the user can interact with the implementation of the systems and technologies described herein), or include such background components, intermediate calculating components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server can also be a cloud server, a server of a distributed system, or a server combined with a block-chain.

According to some embodiments of the disclosure, the disclosure further provides a computer program product, including computer programs. When the computer programs are executed by a processor, the method for recognizing an action described in the above embodiments of the disclosure is performed.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

**Claims**

1. A computer-implemented method for extracting information, comprising:

   obtaining (S101; 201) an information stream comprising text and an image;
   generating (S102), according to the text, embedded representations of textual entity mentions and a textual similarity matrix of the textual entity mentions and candidate textual entities;
   generating (S103), according to the image, embedded representations of image entity mentions and an image similarity matrix of the image entity mentions and candidate image entities; and
   determining (S104), based on an optimal transport, target textual entities of the textual entity mentions and target image entities of the image entity mentions according to the embedded representations of the textual entity mentions, the embedded representations of the image entity mentions, the textual similarity matrix and the image similarity matrix.

2. The method of claim 1, wherein generating (S102), according to the text, the embedded representations of the textual entity mentions and the textual similarity matrix of the textual entity mentions and the candidate textual entities comprises:

determining (S202) the textual entity mentions and the candidate textual entities according to the text;
generating (S203) the embedded representations of the textual entity mentions according to the textual entity mentions;
generating (S204) embedded representations of the candidate textual entities according to the candidate textual entities; and
calculating (S205) the textual similarity matrix according to the embedded representations of the textual entity mentions and the embedded representations of the candidate textual entities.

3.  The method of claim 2, wherein determining (S201) the textual entity mentions and the candidate textual entities according to the text comprises:

determining (S301) the textual entity mentions according to the text;
determining (S302) n textual entities with a largest number of redirected links as preliminary candidate textual entities according to Wikipedia statistics on a number of redirected links, and the textual entity mentions;
determining (S303) m textual entities with a largest number of redirected links among the preliminary candidate textual entities as the candidate textual entities; and
calculating (S304) similarities between the textual entity mentions and the preliminary candidate textual entities, and determining (S304) p textual entities with a highest similarity as the candidate textual entities.

4.  The method of claim 2 or 3, wherein calculating (S205) the textual similarity matrix according to the embedded representations of the textual entity mentions and the embedded representations of the candidate textual entities comprises:
inputting (S401) the embedded representations of the textual entity mentions and the embedded representations of the candidate textual entities into a textual similarity model, in which the embedded representations of the textual entity mentions and the embedded representations of the candidate textual entities pass through a single-layer neural network in the textual similarity model and are multiplied with a hidden relation vector to obtain correlation scores between the textual entity mentions and the candidate textual entities, and the correlation scores belonging to a same hidden relation are normalized, to obtain the textual similarity matrix.

5.  The method of any one of claims 1 to 4, wherein generating (S103), according to the image, the embedded representations of the image entity mentions and the image similarity matrix of the image entity mentions and the candidate image entities comprises:

inputting (S206) the image into an image encoding model to obtain the embedded representations of the image entity mentions;
inputting (S207) the candidate image entities into the image encoding model to obtain embedded representations of the candidate image entities; and
calculating (S208) cosine similarities between the image entity mentions and the candidate image entities according to the embedded representations of the image entity mentions and the embedded representations of the candidate image entities to obtain the image similarity matrix.

6.  The method of claim 5, wherein the image encoding model is an encoder module in a transformer model.

7.  The method of any one of claims 1 to 6, wherein determining (S104), based on the optimal transport, the target textual entities of the textual entity mentions and the target image entities of the image entity mentions according to the embedded representations of the textual entity mentions, the embedded representations of the image entity mentions, the textual similarity matrix and the image similarity matrix, comprises:

determining (S209), based on the optimal transport, a textual entity mention with a minimum transport cost and an image entity mention with a minimum transport cost according to the embedded representations of the textual entity mentions and the embedded representations of the image entity mentions;
determining (S210) the target textual entities according to the textual entity mention with the minimum transport cost and the image similarity matrix; and
determining (S211) the target image entities according to the image entity mention with the minimum transport cost and the textual similarity matrix.

8. The method of claim 7, wherein determining (S209), based on the optimal transport, the textual entity mention with the minimum transport cost and the image entity mention with the minimum transport cost according to the embedded representations of the textual entity mentions and the embedded representations of the image entity mentions, comprises:

   calculating (S501) a textual statistical divergence between any two of the textual entity mentions according to embedded representations of the any two of the textual entity mentions;
   calculating (S502) an image statistical divergence between any two of the image entity mentions according to embedded representations of the any two of the image entity mentions;
   determining (S503) a transport transition matrix with the minimum transport cost according to the text statistical divergence and the image statistical divergence; and
   determining (S504) the textual entity mention with the minimum transport cost and the image entity mention with the minimum transport cost according to the transport transition matrix with the minimum transport cost.

9. The method of claim 8, wherein the textual statistical divergence and/or the image statistical divergence is a Gromov-Wasserstein distance.

10. An apparatus for extracting information, comprising:

    an obtaining module (801; 901), configured to obtain an information stream comprising text and an image;
    a first generating module (802; 902), configured to generate, according to the text, embedded representations of textual entity mentions and a textual similarity matrix of the textual entity mentions and candidate textual entities;
    a second generating module (803; 903), configured to generate, according to the image, embedded representations of image entity mentions and an image similarity matrix of the image entity mentions and candidate image entities; and
    a determining module (803; 903), configured to determine, based on an optimal transport, target textual entities of the textual entity mentions and target image entities of the image entity mentions according to the embedded representations of the textual entity mentions, the embedded representations of the image entity mentions, the textual similarity matrix and the image similarity matrix.

11. The apparatus of claim 10, wherein the first generating module (802; 902) comprises:

    a first determining unit (9021), configured to determine the textual entity mentions and the candidate textual entities according to the text;
    a first generating unit (9021), configured to generate the embedded representations of the textual entity mentions according to the textual entity mentions;
    a second generating unit (9021), configured to generate embedded representations of the candidate textual entities according to the candidate textual entities; and
    a first calculating unit (9021), configured to calculate the textual similarity matrix according to the embedded representations of the textual entity mentions and the embedded representations of the candidate textual entities.

12. The apparatus of claim 11, wherein the first determining unit (9021) comprises:

    a first determining subunit (90211), configured to determine the textual entity mentions according to the text;
    a second determining subunit (90212), configured to determine n textual entities with a largest number of redirected links as preliminary candidate textual entities according to Wikipedia statistics on a number of redirected links and the textual entity mentions;
    a third determining subunit (90213), configured to determine m textual entities with a largest number of redirected links among the preliminary candidate textual entities as the candidate textual entities; and
    a fourth determining subunit (90214), configured to calculate similarities between the textual entity mentions and the preliminary candidate textual entities, and determine p textual entities with a highest similarity as the candidate textual entities.

13. An electronic device, comprising:

    at least one processor; and
    a memory communicatively coupled to the at least one processor; wherein,

the memory is configured to store instructions executable by the at least one processor, and when the instructions are executed by the at least one processor, the at least one processor is enabled to perform the method according to any one of claims 1-9.

**14.** A non-transitory computer-readable storage medium storing computer instructions, wherein the computer instructions are configured to cause a computer to perform the method according to any one of claims 1-9.

**15.** A computer program product comprising computer programs, wherein when the computer programs are executed by a processor, the method according to any one of claims 1-9 is performed.

S101

obtaining an information stream comprising text and an image

S102

generating, according to the text, embedded representations of textual entity mentions and a textual similarity matrix of the textual entity mentions and candidate textual entities

S103

generating, according to the image, embedded representations of image entity mentions and an image similarity matrix of the image entity mentions and candidate image entities

S104

determining, based on an optimal transport, target textual entities of the textual entity mentions and target image entities of the image entity mentions according to the embedded representations of the textual entity mentions, the embedded representations of the image entity mentions, the textual similarity matrix and the image similarity matrix

FIG. 1

S201

obtaining an information stream comprising text and an image

S202

determining textual entity mentions and candidate textual entities according to the text

S203

generating embedded representations of the textual entity mentions according to the textual entity mentions

S204

generating embedded representations of the candidate textual entities according to the candidate textual entities

S205

calculating a textual similarity matrix according to the embedded representations of the textual entity mentions and the embedded representations of the candidate textual entities

S206

inputting the image into an image encoding model to obtain embedded representations of image entity mentions

S207

inputting candidate image entities into the image encoding model to obtain embedded representations of the candidate image entities

S208

calculating cosine similarities between the image entity mentions and the candidate image entities according to the embedded representations of the image entity mentions and the embedded representations of the candidate image entities to obtain an image similarity matrix

S209

determining a textual entity mention with a minimum transport cost and an image entity mention with a minimum transport cost according to the embedded representations of the textual entity mentions and the embedded representations of the image entity mentions

S210

determining target textual entities according to the textual entity mention with the minimum transport cost and the image similarity matrix

S211

determining target image entities according to the image entity mention with the minimum transport cost and the textual similarity matrix

FIG. 2

S301

determining the textual entity mentions according to the text

S302

determining n textual entities with a largest number of redirected links as preliminary candidate textual entities according to Wikipedia statistics on a number of redirected links and the textual entity mentions

S303

determining m textual entities with a largest number of redirected links among the preliminary candidate textual entities as the candidate textual entities

S304

calculating similarities between the textual entity mentions and the preliminary candidate textual entities, and determining p textual entities with a highest similarity as the candidate textual entities

FIG. 3

S401

inputting the embedded representations of the textual entity mentions and the embedded representations of the candidate textual entities into a textual similarity model to obtain the textual similarity matrix, wherein the embedded representations of the textual entity mentions and the embedded representations of the candidate textual entities pass through a single-layer neural network in the textual similarity model and are multiplied with a hidden relation vector to obtain correlation scores between the textual entity mentions and the candidate textual entities, and the scores are normalized to obtain the textual similarity matrix

FIG. 4

S501

calculating a textual statistical divergence between any two of the textual entity mentions according to embedded representations of the any two of the textual entity mentions

S502

calculating an image statistical divergence between any two of the image entity mentions according to embedded representations of the any two of the image entity mentions

S503

determining a transport transition matrix with the minimum transport cost according to the text statistical divergence and the image statistical divergence

S504

determining the textual entity mention with the minimum transport cost and the image entity mention with the minimum transport cost according to the transport transition matrix with the minimum transport cost

FIG. 5

FIG. 6

EP 4 131 024 A1

S701

an information stream including text and an image is obtained

S702

textual entity mentions are determined according to the text

S710

the image is input into an image encoding model to obtain embedded representations of image entity mentions

S709

candidate image entities are input into the image encoding model to obtain embedded representations of the candidate image entities

S703

n textual entities with a largest number of redirected links are determined as preliminary candidate textual entities

S705

similarities between the textual entity mentions and the preliminary candidate textual entities are calculated, and p textual entities with a highest similarity are determined as the candidate textual entities

S711

cosine similarities between the image entity mentions and the candidate image entities are calculated according to the embedded representations of the image entity mentions and the embedded representations of the candidate image entities to obtain an image similarity matrix

S704

m textual entities with a largest number of redirected links among the preliminary candidate textual entities are determined as the candidate textual entities

S707

embedded representations of the candidate textual entities are generated

S706

embedded representations of the textual entity mentions are generated

S708

the embedded representations of the textual entity mentions and the embedded representations of the candidate textual entities are input into a textual similarity model to obtain a textual similarity matrix, in which the embedded representations of the textual entity mentions and the embedded representations of the candidate textual entities pass through a single-layer neural network in the textual similarity model and are multiplied with a hidden relation vector to obtain correlation scores between the textual entity mentions and the candidate textual entities, and the scores are normalized to obtain the textual similarity matrix

S713

an image statistical divergence between any two of the image entity mentions is calculated according to embedded representations of the any two of the image entity mentions

S712

a textual statistical divergence between any two of the textual entity mentions is calculated according to embedded representations of the any two of the textual entity mentions

S714

a transport transition matrix with the minimum transport cost is determined according to the text statistical divergence and the image statistical divergence

S715

the textual entity mention with the minimum transport cost and the image entity mention with the minimum transport cost are determined according to the transport transition matrix with the minimum transport cost

S716

target textual entities are determined according to the textual entity mention with the minimum transport cost and the image similarity matrix

S717

target image entities are determined according to the image entity mention with the minimum transport cost and the textual similarity matrix

FIG. 7

22

800

apparatus for extracting
information

801

obtaining module

802

first generating
module

803

second generating
module

804

determining
module

FIG. 8

900

apparatus for extracting
information

901

obtaining module

902

first generating module

9021

first determining unit

90211

first determining subunit

90212

second determining subunit

90213

third determining subunit

90214

fourth determining subunit

9022

first generating unit

9023

second generating unit

9024

first calculating unit

90241

input subunit

903

second generating unit

9031

first input unit

9032

second input unit

9033

second calculating unit

904

determining module

9041

second determining unit

90411

first calculating subunit

90412

second calculating subunit

90413

fifth determining subunit

90414

sixth determining subunit

9042

third determining unit

9043

fourth determining unit

FIG. 9

1000

~1001

calculating
unit

~1002

ROM

~1003

RAM

~1004

~1005

I/O interface

~1006

inputting
unit

~1007

outputting
unit

~1008

storage
unit

~1009

communication
unit

FIG. 10

Europäisches
Patentamt

European
Patent Office

Office européen
des brevets

# EUROPEAN SEARCH REPORT

Application Number

**EP 22 19 1894**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERIC MULLER-BUDACK ET AL: "Multimodal Analytics for Real-world News using Measures of Cross-modal Entity Consistency",<br>ARXIV.ORG, CORNELL UNIVERSITY LIBRARY, 201 OLIN LIBRARY CORNELL UNIVERSITY ITHACA, NY 14853,<br>23 October 2020 (2020-10-23), XP081795627,<br>* abstract *<br>* 3 Cross-Modal Consistency Verification; page 2 - page 3 *<br>* figure 2 *<br>----- | 1-15 | INV.<br>G06F16/55<br>G06F16/35 |
| X | NIAN FUDONG NIANFUDONG@GMAIL COM ET AL: "Multi-Modal Knowledge Representation Learning via Webly-Supervised Relationships Mining",<br>PROCEEDINGS OF THE 25TH ACM INTERNATIONAL CONFERENCE ON MULTIMEDIA, ACMPUB27, NEW YORK, NY, USA,<br>19 October 2017 (2017-10-19), pages 411-419, XP058619434,<br>DOI: 10.1145/3123266.3123443<br>ISBN: 978-1-4503-8450-6<br>* abstract *<br>* page 411, right-hand column, paragraph 2 - page 412, right-hand column, paragraph 3 *<br>* 3 Our Approach;<br>page 413 - page 414, left-hand column *<br>* figures 1, 2, 4 *<br>----- | 1-15 | |
| | | | TECHNICAL FIELDS SEARCHED (IPC) |
| | | | G06F |
| | -/-- | | |

The present search report has been drawn up for all claims

| Place of search | Date of completion of the search | Examiner |
|---|---|---|
| The Hague | 2 January 2023 | Martínez Espuche, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 19 1894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG LI ET AL: "Attention-Based Multimodal Entity Linking with High-Quality Images", 6 April 2021 (2021-04-06), 16TH EUROPEAN CONFERENCE – COMPUTER VISION – ECCV 2020, CORNELL UNIVERSITY LIBRARY, 201 OLIN LIBRARY CORNELL UNIVERSITY ITHACA, NY 14853, PAGE(S) 533 – 548, XP047604315, [retrieved on 2021-04-06] * abstract * * page 534, paragraph 2 – page 535, paragraph 3 * * 3 Proposed Approach; page 537 * * A Two-Stage Image and Text Correlation; page 539 – page 540 * * figures 2, 3 *  ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 2 January 2023 | Martínez Espuche, F |

EPO FORM 1503 03.82 (P04C01)